Europäisches Patentamt

European Patent Office

Office européen des brevets

(19)

(11) Publication number: **0 212 855**
**B1**

# EUROPEAN PATENT SPECIFICATION

(12)

(45) Date of publication of the patent specification:
12.09.90

(51) Int. Cl.⁵: **B01D 53/34**, F23J 15/00

(21) Application number: 86305613.1

(22) Date of filing: **22.07.86**

(54) Method of removing mercury from incinerator exhaust gas.

(30) Priority: 31.07.85 JP 167443/85

(43) Date of publication of application:
04.03.87 Bulletin 87/10

(45) Publication of the grant of the patent:
12.09.90 Bulletin 90/37

(84) Designated Contracting States:
CH DE FR GB LI SE

(56) References cited:
FR-A- 2 018 576
FR-A- 2 200 043

CHEMICAL ABSTRACTS, vol. 89, 1978, page 290,
abstract no. 168132f, Columbus, Ohio, US; L.F.
FEDOROVSKAYA et al.: "Removal of mercury and
chlorine from waste gases"

(73) Proprietor: NIPPON KOKAN KABUSHIKI KAISHA,
1-2 Marunouchi 1-chome Chiyoda-ku, Tokyo 100(JP)

(72) Inventor: Higuchi, Nariyoshi, 8-3 Okamura 7-chome
Isogo-ku, Yokohama-shi Kanagawa-ken(JP)
Inventor: Yamagishi, Miki, 2-3-6 Nakamachi Meguro-ku,
Tokyo(JP)
Inventor: Miyachi, Tsuneharu, 5-16-19 Kokubunjidai,
Ebina-shi Kanagawa-ken(JP)

(74) Representative: Marsh, Roy David et al, Urquhart-Dykes
& Lord 419B Midsummer House Midsummer Boulevard,
Central Milton Keynes MK9 3BN(GB)

## Description

The present invention relates to a method of removing the mercury in the exhaust gas from an incinerator and more particularly to a method so designed that the exhaust gas containing mercury and hydrochloric acid as its components is washed with a wash liquid thereby dissolving the mercury and hydrochloric acid into the wash liquid and removing the mercury from the exhaust gas.

In the past, the exhaust gas from the incinerator has contained harmful substances such as hydrochloric acid (HCl) and sulfurous acid ($SO_2$) which are governed by the regulations and the exhaust gas has been treated and discharged by harmful substance removing methods such as dry process, semi-dry process and wet process. However, the exhaust gas also contains mercury and its compounds so that although not governed by the regulations, their contents frequently amount to more than the work environmental standard value of 0.05 mg/m² and the mercury and its compounds cannot be removed by the conventional methods designed for the removal of hycrochloric acid (HCl) and sulfurous acid ($SO_2$).

In this connection, there has been known (see, for example, FR-A 2 200 043) a mercury removing method which is intended to remove the mercury in a hydrogen gas produced during the production of caustic soda by the mercury method. However, the hydrogen gas and the incinerator exhaust gas differ from each other with respect to the gas composition and temperature as well as the form of the mercury in the gas. Therefore, the method of removing the mercury in the hydrogen gas resulting from the production of mercury-method caustic soda cannot be applied as such to the removal of the mercury from the incinerator exhaust gas. Also, while the hydrogen gas produced during the production of mercury-method caustic soda contains only mercury as an impurity, various contaminative substances such as gaseous or particulate heavy metals, organic substances such as organic acids, inorganic and organic reducing substances, dust and unburnt substances exist in the incinerator exhaust gas. Moreover, the hydrogen gas produced during the production of mercury-method caustic soda has a temperature near the room temperature and the washing operation for removing the mercury is effected at this temperature. On the contrary, in the refuse incinerator process the temperature of the exhaust gas prior to its treatment in the gas washing unit is usually about 300°C and therefore the washing operation in the gas washing unit is performed at a high temperature of 70 to 80°C. Thus, the removal of mercury or highly volatile material in the exhaust gas requires that the washing operation be effected at such high temperature and thus the removal of mercury is extremely difficult.

The present invention has been made as a result of various studies and research works made with a view to overcoming the foregoing deficiencies in the prior art.

According to the present invention, there is provided a method of removing mercury from an incinerator exhaust gas which contains mercuric chlorides, hydrochloric acid and reducing agents, the exhaust gas being contacted, when it is at a temperature of about 300°C, with a wash liquid which is maintained at a temperature of from about 70 to about 80°C, the method being characterized by the wash liquid containing a solution of caustic soda and a solution of hypochlorite and having an adjusted pH ranging from 6 to 9, thereby to oxidise the said reducing agents and so avoid the reduction of the said mercuric chlorides to elemental mercury.

Figure 1 is a block diagram of a refuse incineration process incorporating a gas washing unit to which the present invention is applied.

Figure 2 is a schematic diagram of an experiment equipment used for the invention.

Figure 3 is a graph showing the relation between the pH of the wash liquid according to the invention and the removing rate of the total mercury from an exhaust gas.

Figure 4 is a graph showing the relation between the consumption rate of caustic soda in the wash liquid and the pH of the wash liquid according to the invention.

Figure 5 is a graph showing the relation between the pH of the wash liquid and the amount of chlorine gas generation from the wash liquid according to the invention.

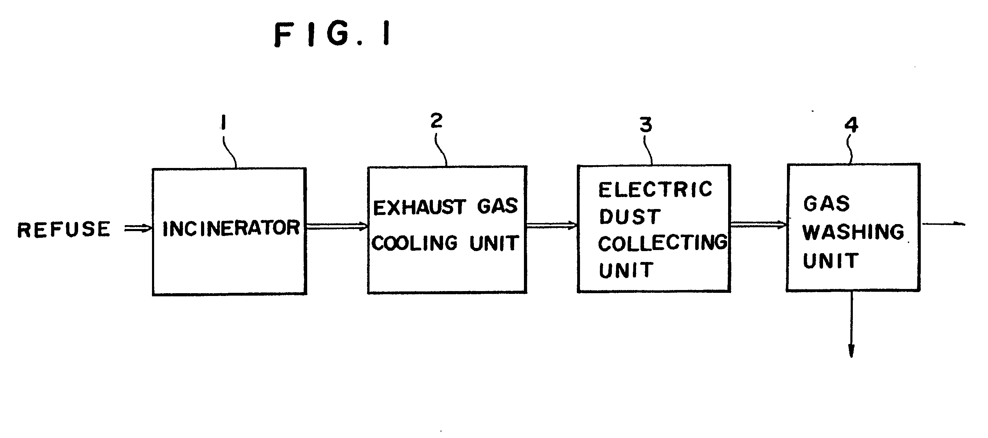

Fig. 1 is a block diagram of a conventional refuse incineration process incorporating a gas washing unit to which the invention is applied. Refuse is charged into an incinerator 1 where the refuse is burnt at a temperature between 900°C and 1200°C and the resulting exhaust gas is cooled to about 300°C in an exhaust gas cooling unit 2. Then, after the dust has been removed by an electric dust collector unit 3, the exhaust gas is introduced into a gas washing unit 4 through its bottom so that the exhaust gas is contacted with an alkaline solution of caustic soda or the like in a counter flow manner in a spray tower, a tray tower or a packed tower and the harmful substances, e.g., hydrochloric acid and sulfurous acid in the exhaust gas are reacted with the alkali thereby removing them in the form of salts such as sodium chloride (NaCl) and sodium sulfate ($Na_2SO_4$).

While the exhaust gas is treated in this way by the gas washing unit 4, mercury and its compounds exist in the treated exhaust gas. Thus, in accordance with the invention the wash liquid used in the gas washing unit 4 consists of an aqueous solution containing an alkaline solution of caustic soda or the like and hypochlorite and the wash liquid is used with a pH value in a given range, thus removing the harmful substances and the total mercury from the exhaust gas.

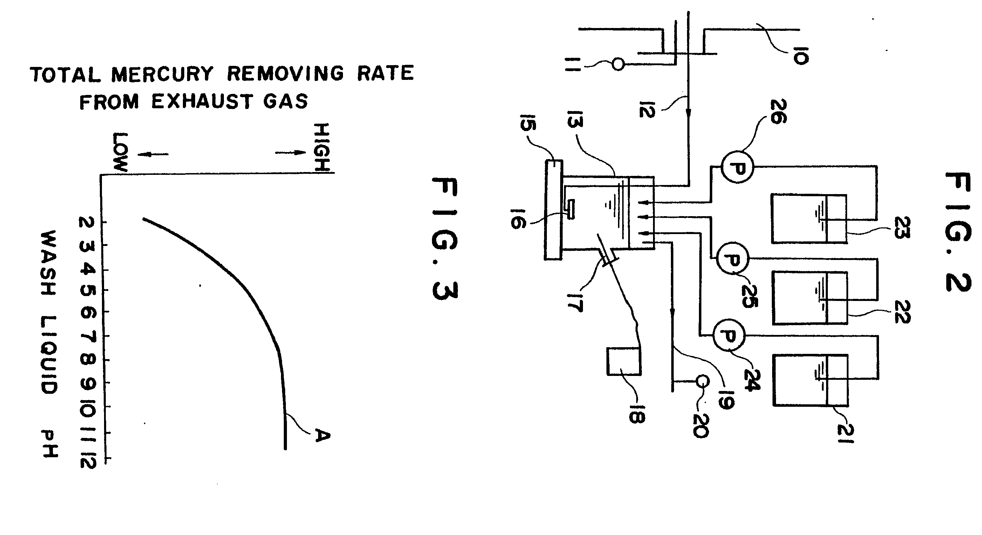

Fig. 2 is a schematic diagram of an experiment equipment used in the experiments which resulted in the discovery of the invention. In the Figure, numeral 10 designates a refuse incinerator exhaust gas flue, 11 an analyzing device for the mercury and its compounds in the exhaust gas in the flue 10, 12 a sample tube for the exhaust gas from the flue 10, 13 a container for gas washing, 15 a temperature controller for the container 13, and 16 an air diffusing bowl arranged at the inner bottom of the container 13 and connected to the sample tube 12. Numeral 17 designates the electrode of a pH meter 18 attached to the side wall of the container 13, 19 a pipe line for discharging the exhaust gas treated with the wash liquid in the container 13, 20 an analyzer for analyzing the total mercury concentration of the mercury and its compounds in the treated exhaust gas, and 21, 22 and 23 containers respectively containing a solution of hydrochloric acid, a caustic soda solution and a sodium hypochlorite solution and the respective solutions are supplied to the container 13 from the containers 21, 22 and 23 by pumps 24, and 26, respectively.

With the experiment equipment constructed as described above, a given amount of the caustic soda is supplied to the container 13 from the container 22 by the pump 25 and the sodium hypochlorite solution is quantatively poured into the caustic soda solution in the container 13 by the pump 26. Then, the exhaust gas from the exhaust gas flue 10 is diffused into the solution in the container 13 through the air diffusing bowl 16. The pH of this solution is adjusted by supplying the caustic soda solution or the hydrochloric acid solution from the container 22 or 21. Then, the total mercury contents of the exhaust gas before and after its treatment with the wash liquid are analyzed by the analyzers 11 and 20 to determine the desired removing rate. Note that the temperature of the wash liquid is selected about 70°C in relation with the actual equipment.

Fig. 3 is a graph showing the relation between the pH of the wash liquid and the removing rate of the total mercury in the exhaust gas which were determined in the above-mentioned manner. As will be seen from the removing rate curve A in the Figure, if the exhaust gas is treated with the wash liquid having a pH of 6 or over, the concentration of the total mercury remaining in the exhaust gas is reduced considerably to such a level which presents no problem in practice. It is also seen that even if the pH of the wash liquid is greater than 9, there is no change in the removing rate of the total mercury. It is to be noted that while the kinds and amounts of harmful substances and total mercury concentrations of the exhaust gases discharged from different refuse incinerators are not the same, the resulting removing rates show substantially the same tendency as the removing rate curve A.

In the past, it has been considered that when the mercury in the hydrogen gas caused by mercury-method caustic soda is washed with the wash liquid, the removing rate of mercury is increased with a decrease in the pH of the wash liquid. However, it has been found that when the mercury in a refuse incinerator exhaust gas is washed with a wash liquid containing hypochlorite, the removing rate of mercury is decreased with a decrease in the pH. A cause for this resides in that if a high-temperature refuse incinerator exhaust gas is washed with a wash liquid having a low pH, the impurities in the exhaust gas are passed into the wash liquid and also the temperature of the wash liquid is increased thus facilitating the decomposition of the hypochlorite.

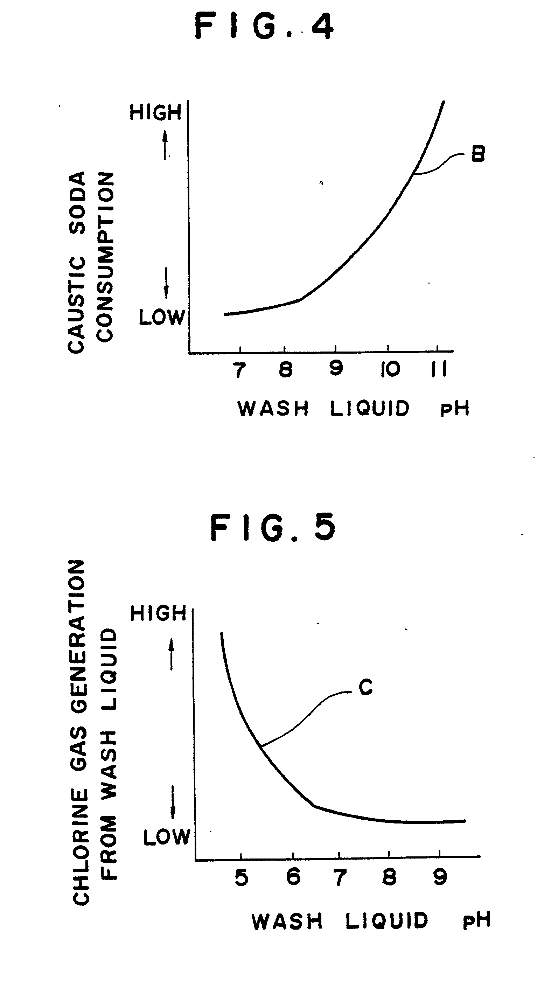

Fig. 4 is a graph showing the relation between the consumption rate of caustic soda in the wash liquid and the pH of the wash liquid and the consumption of the caustic soda is increased suddenly when the pH of the wash liquid exceeds 9 as shown by the caustic soda consumption curve B in the Figure. The reason is that if the wash liquid becomes a strong alkali, the weak acid components in the exhaust gas are also absorbed through for example the absorption of the carbonic acid gas existing in a large amount in the exhaust gas.

Fig. 5 is a graph showing the relation between the pH of the wash liquid and the amount of chlorine gas generation from the wash liquid and it will be seen from the curve C that the amount of chlorine gas generation from the wash liquid is increased when the pH of the wash liquid becomes more acidic than 9 and the amount of chlorine gas generation is increased rapidly when the pH is more acidic than 6.

The following Table 1 shows the results of the above-mentioned experiments in the forms of concrete numeric values.

## Table 1
==========

| Test No. | Wash liquid pH | Sodium hypochlorite addition to wash liquid | Sodium hypochlorite in wash liquid at end of test | Removing rate of mercury |
|---|---|---|---|---|
| 1 | 2.5 | 10% solution x 0.1 ml/min | 2 mg/l | 75% |
| 2 | 2.5 | Ditto | 2 | 74 |
| 3 | 2.5 | 10% solution x 0.2 ml/min | 3 | 74 |
| 4 | 5 | 10% solution x 0.1 ml/min | 9 | 82 |
| 5 | 6 | Ditto | 15 | 89 |
| 6 | 7.5 | 10% solution x 0.1 ml/min | 18 | 93 |
| 7 | 7.5 | Ditto | 20 | 90 |
| 8 | 7.5 | 10% solution x 0.2 ml/min | 30 | 93 |
| 9 | 9 | 10% solution x 0.1 ml/min | 20 | 92 |
| 10 | 10 | Ditto | 20 | 86 |
| 11 | 11 | 10% solution x 0.1 ml/min | 21 | 85 |
| 12 | 11 | 10% solution x 0.2 ml/min | 33 | 83 |

EP 0 212 855 B1

From the results of tne experiments shown in Figs. 3 to 5 and Table 1 it will be seen that the removing rate of the total mercury in exhaust gases is improved considerably when the pH of the wash liquid is in the range of 6 to 9 and that the removing rate of the total mercury remains unchanged and the consumption of caustic soda is increased greatly when the pH is greater than 9. On the other hand, if the pH of the wash liquid is less than 6, the amount of chlorine gas generated from the wash liquid is increased and this chlorine gas is discharged, along with the exhaust gas, to the outside of the system thus causing troubles. Thus, the optimum range of values for the pH of the wash liquid is 6 to 9.

In accordance with the invention, on the basis of these experiment results, the exhaust gas is washed with a wash liquid containing a solution of caustic soda and a solution of hypochlorite and having an adjusted pH of 6 to 9 in place of the conventional wash liquid consisting of a solution containing caustic soda. Generally, the exhaust gas generated from a refuse incinerator contains hydrochloric acid, chlorine, etc., and therefore the mercury in the exhaust gas reacts with these substances thereby producing mercuric chlorides. However, these mercuric chlorides are dissolved into the wash liquid and therefore they can be washed by the wash liquid for removal. On the other hand, such reducing substances as amines and sulfur oxides, e.g., sulfur dioxide or sulfur trioxide also exist in the exhaust gas and therefore the mercuric chlorides are reduced producing metallic mercury.

The metallic mercury is not dissolved into the solution and thus it is entrained on the exhaust gas. Thus, in accordance with the invention, hypochlorite is added to a solution of caustic soda thereby oxidizing the reducing substances in the exhaust gas and preventing the reduction of the mercuric chlorides and also the pH of the wash liquid is maintained in the range of 6 to 9 thereby remarkably improving the removing rate of the total mercury in the exhaust gas.

It is to be noted that the amount of caustic soda in the wash liquid can be determined in correspondence to the amounts of hydrochloric acid (HCl), etc., in the exhaust gas. Also, the amount of hypochlorite needs not be greater than that required for oxidizing the reducing substances in the exhaust gas.

From the foregoing description it will be seen that in accordance with the invention, by virtue of the fact that the exhaust gas from an incinerator is washed with an exhaust gas wash liquid containing a solution of caustic soda and hypochlorite and having an adjusted pH of 6 to 9, there is the effect of greatly improving the removing rate of the total mercury in the exhaust gas, preventing the diffusion of the mercury into the atmosphere and contributing to the prevention of environmental pollution. In the past, the washing tower for washing the exhaust gas with a caustic soda solution alone has been made from titanium in consideration of the corrosion resistance to a salt (NaCl) resulting from the reaction between the caustic soda in the wash liquid and the hydrochloric acid and having a concentration of about several % to 20% and this corrosion resistance of the washing tower has been considerably low. However, it has been found that the addition of hypochlorite to the caustic soda solution improves the corrosion resistance of the titanium and this considerably increases the merit of the invention as an industrial process.

## Claims

1. A method of removing mercury from an incinerator exhaust gas which contains mercuric chlorides, hydrochloric acid and reducing agents, the exhaust gas being contacted, when it is at a temperature of about 300°C, with a wash liquid which is maintained at a temperature of from about 70 to about 80°C, the method being characterized by the wash liquid containing a solution of caustic soda and a solution of hypochlorite and having an adjusted pH ranging from 6 to 9, thereby to oxidise the said reducing agents and so avoid the reduction of the said mercuric chlorides to elemental mercury.

2. A method according to claim 1, wherein said hypochlorite is sodium hypochlorite.

## Patentansprüche

1. Verfahren zur Entfernung von Quecksilber aus einem Abfallverbrennungsofenabgas, das Quecksilberchloride, Salzsäure und Reduktionsmittel enthält, wobei das Abgas, wenn es eine Temperatur von 300°C aufweist, in Kontakt mit einer Waschflüssigkeit gebracht wird, die auf einer Temperatur von ungefähr 70–80°C gehalten wird, dadurch gekennzeichnet, daß die Waschflüssigkeit eine Lösung von kaustischem Soda und eine Lösung von Hypochlorit enthält und einen eingestellten pH-Wert im Bereich von 6–9 aufweist, um dadurch die Reduktionsmittel zu oxidieren und so die Reduktion der Quecksilberchloride zu elementarem Quecksilber zu vermeiden.

2. Verfahren nach Anspruch 1, bei welchem das Hypochlorit Natriumhypochlorit ist.

## Revendications

1. Procédé pour éliminer le mercure d'un gaz effluent d'un incinérateur qui contient des chlorures de mercure, de l'acide chlorhydrique et des agents réducteurs, le gaz effluent étant mis en contact, alors qu'il est à une température d'environ 300°C, avec un liquide de lavage qui est maintenu à une température d'environ 70 à environ 80°C, le procédé étant caractérisé en ce que le liquide de lavage contient une solution de soude caustique et une solution d'hypochlorite et a un pH ajusté compris dans la gamme de 6 à 9, pour oxyder lesdits agents réducteurs et éviter ainsi la réduction desdits chlorures de mercure en mercure élémentaire.

2. Procédé selon la revendication 1, dans lequel ledit hypochlorite est l'hypochlorite de sodium.

# FIG. 1

REFUSE ⟹ INCINERATOR → EXHAUST GAS COOLING UNIT → ELECTRIC DUST COLLECTING UNIT → GAS WASHING UNIT →

EP 0 212 855 B1

# FIG. 2

# FIG. 3

# FIG. 4

# FIG. 5